# DEMANDE DE BREVET EUROPEEN

(11) **EP 4 755 594 A1**
(43) Date de publication de la demande: **10.06.2026**
(21) Numéro de dépôt: 25218604.4
(22) Date de dépôt: 26.11.2025
(51) Int. Cl.: B25J 9/16

(54) **SYSTÈME D'AIDE À LA PROGRAMMATION D'UN ROBOT**

(30) Priorité: 09.12.2024 FR 2413695
(71) Demandeur: Commissariat à l'Energie Atomique et aux Energies Alternatives, 75015 Paris (FR)
(72) Inventeur: GOSSELIN, Florian, 91191 GIF SUR YVETTE (FR)
(74) Mandataire: Atout PI Laplace

(57) **Abrégé**

L'invention se rapporte à un système d'aide à la programmation d'un robot (2) apte à effectuer au moins une action sur une entité (310), comprenant :
- un premier dispositif de désignation (41), configuré pour permettre à un opérateur (1) de désigner une entité (310) en projetant un premier motif (416) sur l'entité (310) ;
- un dispositif de confirmation de visibilité (42, 45), configuré pour fournir à l'opérateur un rendu visuel (426, 4261) du caractère visible, par le robot (2), de l'entité (310) ;
- au moins un dispositif de confirmation d'atteignabilité (43, 44, 45, 4140), configuré pour fournir à l'opérateur (1) un rendu visuel (436, 446, 4262, 4180) du caractère atteignable, par un effecteur (24, 26) du robot (2), de l'entité (310) ;
- une interface homme-machine (4101-4105, 4140, 4160-4170), configurée pour recevoir au moins une commande, fournie par l'opérateur (1), d'interaction du robot (2) avec l'entité (310).

## Description

### Domaine technique

L'invention se rapporte au domaine de la programmation de robots aptes à effectuer au moins une action (action physique ou mesure, inspection) sur une entité à l'aide d'un effecteur, d'un outil ou d'un moyen de mesure. L'invention peut être appliquée au domaine industriel, agricole, à la maintenance, ou à toute application qui nécessite de désigner une zone spécifique à un robot dans le cadre de sa programmation.

La programmation des robots a longtemps reposé sur l'usage de langages informatiques dédiés utilisés pour programmer les robots hors ligne (approche dite « PHL » pour « Programmation Hors Ligne »), les programmes pouvant être validés sur site ou en amont à l'aide de logiciels de CAO dédiés (e.g. RobCAD, RoboDK, Robotstudio). Cette approche traditionnelle requiert cependant des personnels qualifiés (ayant des compétences en robotique et en informatique), et elle est longue et fastidieuse (en amont pour programmer les robots en environnement simulé puis sur site pour ajuster les programmes aux conditions rencontrées dans la réalité).

Pour éviter ces écueils et faciliter la programmation des robots, les ingénieurs et chercheurs ont proposé, dans les années 2000 et 2010, de nouveaux paradigmes basés sur la programmation par démonstration ou par imitation :
- La programmation par démonstration, en général utilisée en association avec des robots collaboratifs pouvant travailler au contact des humains et être déplacés par eux, consiste à déplacer le robot « à la main » pour l'amener dans des positions clés successives ou le long d'une trajectoire associée à la tâche à réaliser, puis à demander au robot de « rejouer » ces positions ou cette trajectoire pour réaliser la tâche (directement si on a appris des trajectoires ou après la génération de trajectoires « lissant » et optimisant le passage par les points successifs de démonstration si on a appris des points de passage). Cette approche, directement mise en œuvre sur site, est plus rapide et plus intuitive que la PHL, mais elle nécessite de « rejouer » toute la tâche avec le robot, une fois ou plusieurs fois (on fait souvent plusieurs démonstrations dont on extrait des moyennes statistiques servant de références). Pour des tâches complexes, cela peut être relativement long, et si le robot n'est pas très transparent (i.e. pas ou peu réversible, pas facile à déplacer à la main) les configurations de passage désirées peuvent être difficiles à atteindre ou ne pas être très précises. Pour contourner cette difficulté, des approches en plusieurs temps ont été proposées, autorisant la réalisation des démonstrations en plusieurs étapes (e.g. on commence par montrer au robot la trajectoire à suivre, puis l'orientation à respecter le long de cette trajectoire, puis la vitesse de référence). Cela facilite les choses mais les rend encore plus longues, et cela ne règle pas totalement les problèmes de précision si le robot est difficile à déplacer.
- La programmation par imitation permet de contourner ce problème. Elle consiste à réaliser la tâche en déplaçant non plus le robot mais un outil tenu en main (ou la main elle-même) dont on mesure les déplacements grâce à un système de capture de mouvement additionnel. Dans ces conditions, la trajectoire de référence peut être réalisée plus naturellement, sans aucune gêne due au robot. Il faut toutefois ensuite s'assurer que le robot pourra la réaliser, et le bras humain étant moins précis qu'un robot, il peut être nécessaire de « rééditer » les configurations de passage ou les trajectoires apprises pour les ajuster à des valeurs précises (ce défaut est aussi vrai pour les approches par démonstration).

Ainsi, que ce soit pour des approches par démonstration ou par imitation, il est souvent difficile d'assurer la précision de configurations de passage spécifiques, et il est souvent nécessaire de « rééditer » les configurations apprises pour les ajuster. On utilise le plus souvent pour cela des « teach pendants » (pupitres d'apprentissage munis d'écrans tactiles permettant d'éditer des champs associés à différents paramètres, dont ces positions de passage). Ces teach pendants permettent aussi de programmer des trajectoires simples du robot, au niveau de ses articulations ou de son effecteur (e.g. mouvements de translations ou de rotations pures). L'usage de tel « pendants », promue comme une approche « intuitive » par les fabricants de robots qui en proposent, est ainsi limitée à des tâches simples.

Enfin, plus récemment, les progrès des outils d'Intelligence Artificielle (IA) et des grands modèles de langage (LLMs) ont conduit certaines équipes à proposer de programmer les robots à l'aide d'instructions de haut niveau données dans des discussions de type « chats » (usage de prompts) ou par oral, le programme étant généré automatiquement par IA générative. Cette approche est très intuitive et elle permet de donner des instructions assez générales (e.g. « va dans la cuisine et apporte-moi une pomme ») mais elle nécessite des moyens de calcul très importants et des données en grande quantité. Au-delà, des questions se posent toujours sur leur fiabilité (e.g. hallucinations des IA génératives). Enfin, ces approches :
- ne sont pas adaptées à toutes les tâches. Elles sont très bien adaptées quand les ordres sont clairs et explicites et que les objets désignés sont différents les uns des autres ou que le choix de l'un d'entre eux n'est pas très important (e.g. « apporte-moi un paquet de chips ») mais elles sont moins efficaces quand les ordres sont plus difficiles à formuler, par exemple quand on désigne un objet parmi N du même type, ou un endroit dans une zone indistincte. Comme cela serait le cas avec un collaborateur humain, de longues explications peuvent alors être nécessaires (e.g. « cet écrou doit être resserré » ne suffit pas, il faut être plus précis, e.g. « le troisième écrou en partant du bas et le second à gauche doit être resserré » - avec des erreurs possibles), ou de longs échanges (« non pas celui-là, celui d'à côté »). La désignation de l'objectif peut même être très difficile à formuler simplement, voire impossible (e.g. zone précise à contrôler en Contrôle Non Destructif sur un objet plan sans que cette zone ne présente un signe distinctif).
- ne sont pas adaptées à tous les contextes. L'usage de chats à base de prompts est envisageable dans un bureau, mais pas dans une usine (robotique manufacturière), dans un champ (robotique agricole) ou dans un autre environnement contraignant, et l'usage d'une interface vocale n'est pas une solution dès lors que l'environnement est bruyant (comme par exemple dans une usine).

On notera que cette approche par désignation d'objectifs de haut niveau impacte également les logiciels de PHL, avec l'intégration d'une part de solutions de génération de trajectoires efficaces (comme celle développée par exemple par la société Realtime Robotics) permettant de ne désigner que les configurations de départ et d'arrivée (et éventuellement quelques configurations de passage), et non plus de programmer la trajectoire complète, et d'autre part de solutions de programmation contextuelle (e.g. quand on clique sur un objet, le logiciel nous indique ce que l'on peut faire avec). Ces solutions facilitent la PHL mais ne résolvent pas totalement le problème. En effet, elles nécessitent la mise en place d'un jumeau numérique de la cellule, ce qui est relativement long et pas envisageable/rentable pour une PME, et/ou pour une tâche simple. Par ailleurs elles requièrent des personnels qualifiés (informaticiens) et ne résolvent pas les ajustements nécessaires quand la trajectoire programmée est portée sur site.

L'invention vise à remédier aux inconvénients précités.

### Résumé de l'invention

Un objet de l'invention est donc un système d'aide à la programmation d'un robot apte à effectuer au moins une action sur une entité, comprenant :
- un premier dispositif de désignation, configuré pour permettre à un opérateur de désigner une entité en projetant un premier motif sur l'entité ;
- un dispositif de confirmation de visibilité, configuré pour fournir à l'opérateur un rendu visuel du caractère visible, par le robot, de l'entité ;
- au moins un dispositif de confirmation d'atteignabilité, configuré pour fournir à l'opérateur un rendu visuel du caractère atteignable, par un effecteur du robot, de l'entité ;
- une interface homme-machine, configurée pour recevoir au moins une commande, fournie par l'opérateur, d'interaction du robot avec l'entité.

Avantageusement, le dispositif de confirmation de visibilité comprend un système de vision et des moyens de projection d'un deuxième motif sur le premier motif si le premier motif est dans le champ de vision du système de vision.

Avantageusement, le dispositif de confirmation d'atteignabilité comprend des moyens de projection d'au moins un troisième motif sur le premier motif si l'entité est atteignable par l'effecteur.

Avantageusement le premier motif, le deuxième motif et le troisième motif sont différents les uns des autres.

Avantageusement, le dispositif de confirmation de visibilité est configuré pour modifier la couleur du deuxième motif en fonction du caractère visible ou non de l'entité par le système de vision.

Avantageusement le dispositif de confirmation de visibilité est configuré pour modifier la couleur du deuxième motif en fonction de la convergence du premier motif et du deuxième motif.

Avantageusement, le dispositif de confirmation d'atteignabilité est configuré pour modifier la couleur du troisième motif en fonction du caractère atteignable ou non de l'entité par le robot ou l'effecteur.

Avantageusement, le dispositif de confirmation d'atteignabilité est configuré pour modifier la couleur du troisième motif en fonction de la convergence du premier motif et du troisième motif.

Avantageusement, le dispositif de confirmation de visibilité comprend une première unité de commande par asservissement, configurée pour déplacer le robot et/ou pour modifier l'orientation des moyens de projection d'un deuxième motif de façon à minimiser un écart entre le premier motif et le rendu visuel du caractère visible de l'entité.

Avantageusement, le dispositif de confirmation d'atteignabilité comprend une deuxième unité de commande par asservissement, configurée pour déplacer le robot et/ou l'effecteur du robot et/ou pour modifier l'orientation des moyens de projection d'au moins un troisième motif de façon à minimiser un écart entre le premier motif et le rendu visuel du caractère atteignable de l'entité.

Avantageusement, la deuxième unité de commande par asservissement est configurée pour prendre le deuxième motif comme référence fixe pour déplacer le robot et/ou l'effecteur du robot et/ou pour modifier l'orientation des moyens de projection d'au moins un troisième motif.

Avantageusement, le rendu visuel du caractère atteignable de la zone désignée comprend un affichage d'icônes contextuelles par l'interface homme-machine, les icônes étant affichées en fonction d'un contexte d'atteignabilité de l'effecteur sur l'entité.

Avantageusement, le premier dispositif de désignation comprend une source lumineuse non ponctuelle couplée à un masque ajouré.

Avantageusement, le premier motif comprend une croix.

Avantageusement, le système comprend un dispositif de projection, configuré pour éclairer tout le champ de vision du robot.

Avantageusement, le dispositif de projection est configuré pour projeter un quadrillage de lignes dont l'écartement est ajustable en fonction de la précision souhaitée.

Avantageusement, le dispositif de projection est utilisé à la fois pour éclairer le champ de vision du robot, et pour projeter au moins un des motifs parmi le motif de rendu visuel du caractère visible de l'entité et le motif du rendu visuel du caractère atteignable de l'entité.

Avantageusement, le premier dispositif de désignation, le dispositif de confirmation de visibilité et/ou le dispositif de confirmation d'atteignabilité comprennent un moyen de correction de la forme respectivement du premier motif, du rendu visuel du caractère visible de l'entité et/ou du rendu visuel du caractère atteignable de l'entité.

Avantageusement, le système comprend une unité logicielle de traitement d'images configurée pour déterminer la distance entre l'effecteur et l'entité, ou un capteur de distance configuré pour déterminer la distance jusqu'à l'entité, le moyen de correction appliquant une correction en fonction de la distance déterminée.

Avantageusement, le dispositif de confirmation de visibilité et le dispositif de confirmation d'atteignabilité sont intégrés dans une même structure qui est configurée pour projeter à la fois le motif de rendu visuel du caractère visible de l'entité et le motif du rendu visuel du caractère atteignable de l'entité.

Avantageusement, le caractère atteignable, par un effecteur du robot, de l'entité, est déterminé par la connaissance du positionnement du système de vision, afin de calculer les coordonnées de l'entité dans le référentiel du robot, et des mouvements nécessaires pour que l'effecteur atteigne l'entité.

L'invention se rapporte également à un procédé d'aide à la programmation d'un robot apte à effectuer au moins une action sur une entité, comprenant :
- une première étape de désignation d'une entité en projetant un premier motif sur l'entité ;
- une deuxième étape de fourniture d'un rendu visuel du caractère visible, par le robot, de l'entité ;
- une troisième étape de fourniture d'un rendu visuel du caractère atteignable, par un effecteur du robot, de l'entité ;
- une quatrième étape de réception d'au moins une commande, fournie par l'opérateur, d'interaction du robot avec l'entité.

L'invention se rapporte également à un programme d'ordinateur comportant des instructions pour l'exécution du procédé précité, lorsque le programme est exécuté par un processeur.

L'invention se rapporte également à un support d'enregistrement lisible par un processeur sur lequel est enregistré un programme comportant des instructions pour l'exécution du procédé précité, lorsque le programme est exécuté par un processeur.

### Description des figures

D'autres caractéristiques, détails et avantages de l'invention ressortiront à la lecture de la description faite en référence aux dessins annexés donnés à titre d'exemple.
La figure 1 et la figure 2 illustrent deux vues des principaux composants d'un premier mode de réalisation du système selon l'invention.
La figure 3 illustre un exemple de projection des motifs sur l'entité.
La figure 4 illustre des modes de réalisation de premiers motifs.
La figure 5 illustre des formes différentes entre le premier motif et les deuxième et troisième motifs.
La figure 6 illustre un mode de réalisation de personnalisation des motifs.
La figure 7 illustre des modes de réalisation d'implantation du dispositif de confirmation de visibilité et du dispositif de confirmation d'atteignabilité.
La figure 8 et la figure 9 illustrent un mode de réalisation de fonctionnement des dispositifs de désignation disposés sur le robot.
La figure 10 illustre un mode de réalisation du système dans lequel le robot ne comprend qu'un seul effecteur.
La figure 11 illustre un mode de réalisation dans lequel le dispositif de confirmation de visibilité est installé sur un élément fixe.
La figure 12 illustre un mode de réalisation dans lequel le dispositif de confirmation de visibilité est installé sur un drone.
La figure 13 illustre différents modes de réalisation (A-F) de dispositifs de désignation.
La figure 14 illustre une variante de réalisation des systèmes de désignation pouvant être disposés sur le robot.
La figure 15, la figure 16 et la figure 17 illustrent différents modes de réalisation du premier dispositif de désignation.
La figure 18 illustre un mode de réalisation du rendu visuel du caractère atteignable de la zone désignée et des actions rendues possibles par ce caractère atteignable sous forme d'affichage d'icônes contextuelles.
La figure 19 illustre un mode de réalisation de désignation et de validation de plusieurs positions successives à atteindre.
La figure 20 illustre un mode de réalisation de projection du champ de vision du robot.
La figure 21 illustre un mode de réalisation d'assistance à la désignation par projection du champ de vision du robot tenant compte de la profondeur de champ.
La figure 22 illustre un mode de réalisation d'intégration d'un capteur de distance dans un des dispositifs de désignation.
La figure 23 illustre un mode de réalisation d'intégration d'un moyen de correction de la forme respectivement du premier motif, du deuxième motif et/ou du troisième motif.
La figure 24 illustre un mode de réalisation dans lequel les deuxième et troisième motifs sont générés par un même dispositif de désignation.
La figure 25 illustre un mode de réalisation d'utilisation des dispositifs de projection de motifs pour effectuer de l'asservissement visuel.

### Description détaillée

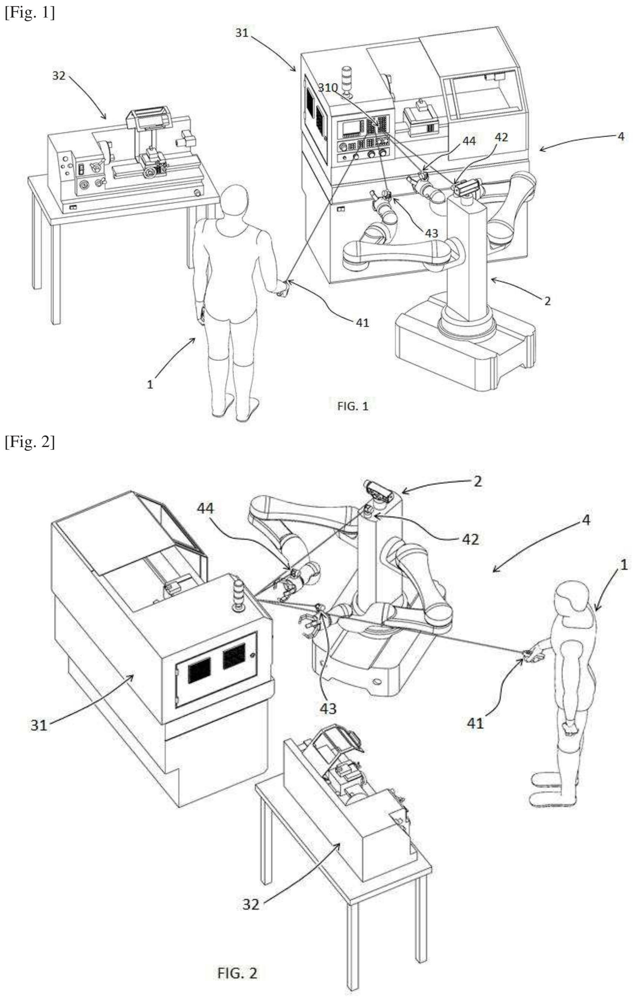

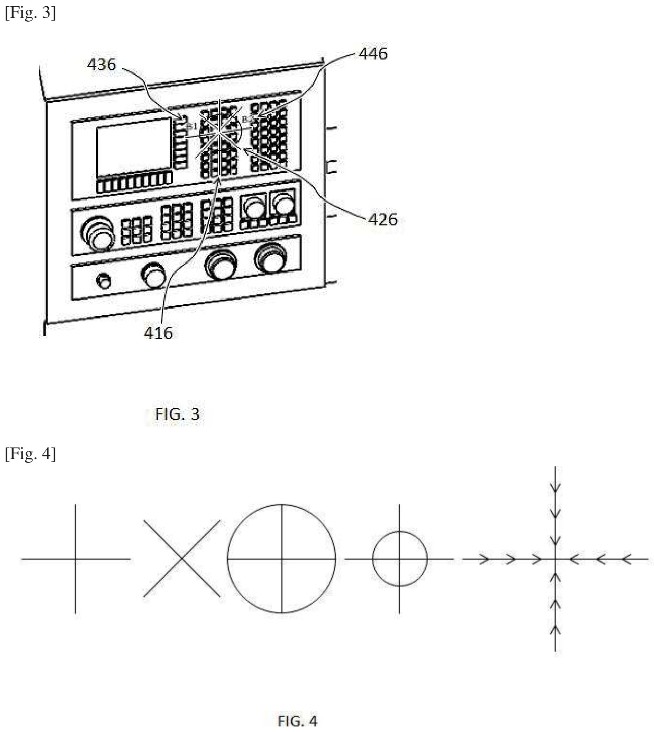

Un premier mode de réalisation du système 4 selon l'invention, illustré, selon deux vues différentes, par les figures 1 et 2, comprend les éléments suivants :
- un premier dispositif de désignation 41 configuré pour permettre à un opérateur 1 de désigner une entité 310 en projetant un premier motif 416 (figure 3) sur l'entité 310. L'entité est désignée par le geste, de façon plus simple et intuitive que via une souris d'ordinateur ou un écran tactile sur une console déportée, et de façon plus précise et explicite que via un chatbot ;
- un dispositif de confirmation de visibilité 42, configuré pour fournir à l'opérateur un rendu visuel du caractère visible, par le robot 2, de l'entité 310. Le dispositif de confirmation de visibilité permet à l'opérateur de vérifier très facilement et très rapidement si le robot peut voir la cible qu'il désigne, et le cas échéant de déplacer le robot ou de demander au robot de se déplacer pour mieux la voir ;
- au moins un dispositif de confirmation d'atteignabilité (43, 44), configuré pour fournir à l'opérateur 1 un rendu visuel du caractère atteignable, par un effecteur du robot 2, de l'entité 310. Il permet de montrer facilement à l'opérateur si le robot peut atteindre les cibles désignées ;
- une interface homme-machine permettant à l'opérateur 1 d'envoyer une consigne ou une commande au robot 2 en lien avec l'entité 310. L'interface homme-machine permet à l'opérateur d'indiquer les actions à effectuer sur les objets désignés. L'interface homme-machine peut être intégrée au premier dispositif de désignation 41, de façon optionnelle, ce qui rend le système plus facile à utiliser.

La consigne/commande que l'utilisateur saisit via l'interface homme-machine n'est validée que si le caractère visible du premier motif et le caractère atteignable de l'entité sont confirmés.

Cela permet ainsi à l'opérateur de programmer le robot facilement et rapidement.

L'entité désignée et avec laquelle le robot interagit peut être de n'importe quelle nature, sous réserve que le robot puisse avoir une interaction avec elle (action physique, observation à distance, mesure, inspection, etc.). Sur les figures, l'entité est représentée par une partie (par exemple un bouton) d'un tour à commande numérique, ou d'une machine-outil (31, 32). L'entité peut également être une pièce mécanique ou un objet à déplacer ou à inspecter, dans le domaine du contrôle ou de la logistique, ou un végétal (ou un animal) ou une partie d'un végétal (ou d'un animal), pour une application de l'invention au domaine agricole.

Le robot peut être de tout type, par exemple et de manière non limitative un robot fixe, un robot mobile (à roues, à chenilles ou à pattes ou associant toute combinaison de roues, de chenilles et de pattes, ou encore se déplaçant en exploitant le glissement ou la sustentation de sa base, par exemple sur un coussin d'air) équipé d'un ou plusieurs bras robotiques, ou même sans bras (notamment pour effectuer des tâches d'inspection), un robot volant ou sous-marin équipé d'un ou plusieurs bras, ou sans bras, le robot et/ou les bras robotiques pouvant être de tout type connu de l'homme de l'art, comme par exemple, et de manière non limitative, un robot série ou un robot parallèle ou un robot ayant une architecture mixte série / parallèle, redondant ou non, anthropomorphe ou non, constitué de corps rigides ou flexibles articulés ou encore de matériau continu (soft robotics) ou toute combinaison de parties articulées et déformables.

Le robot comprend au moins un effecteur (qui peut notamment prendre la forme d'un préhenseur, d'un outil ou d'un dispositif de mesure suivant le domaine considéré), et éventuellement un bras afin de déplacer l'effecteur. L'effecteur disposé sur le robot ou à l'extrémité du robot, s'il s'agit d'un préhenseur, peut lui aussi prendre toutes les formes connues de l'homme de l'art, comme par exemple et de manière non limitative des pinces à deux mors parallèles, des préhenseurs à deux, trois ou quatre doigts ou plus ayant chacun un, deux ou trois corps mobiles ou plus, articulés entre eux le long d'axes de translation ou de rotation ou toute combinaison d'axes de translation ou de rotation, avec ou sans capacité de reconfiguration des « doigts » par rapport à la paume, des mains robotiques anthropomorphes ou non, des dispositifs de saisie magnétique ou à base de ventouses ou utilisant des matériaux développant des forces d'adhésion électrostatiques, ou encore des préhenseurs souples à déformation continue (soft robotics). Le robot et le ou les bras du robot pourront encore ne pas être pourvus de préhenseurs mais d'extrémités plus simples (e.g. tige fixée à leur extrémité), et on pourra aussi utiliser un des corps du robot ou des bras du robot comme effecteur.

Ainsi, le robot peut agir sur l'environnement (par exemple pour effectuer une action physique) ou interagir avec l'environnement (par exemple pour l'inspecter) avec son ou ses effecteurs, ou encore à l'aide d'objets tenus par le ou les effecteurs ou fixés sur le robot ou à l'extrémité de ses bras robotiques.

Le dispositif d'aide à la programmation selon l'invention est particulièrement bien adapté à la programmation de tâches effectuées dans des environnements complexes naturellement adaptés à l'homme. Pour que le robot 2 puisse y effectuer des tâches variées, il peut être avantageux que l'effecteur, s'il s'agit d'un préhenseur, prenne la forme d'une main robotique anthropomorphe. D'autres types d'effecteurs peuvent être envisagés, par exemple des capteurs, destinés à effectuer une mesure et/ou de l'inspection au niveau de l'entité, à distance ou au contact.

Il est à noter que les différents éléments du système d'aide à la programmation de l'invention peuvent communiquer autant que nécessaire par des moyens de communications avec ou sans fil (non représentés sur les figures).

Pour programmer une tâche (une séquence d'au moins une action) du robot, l'opérateur 1 utilise le premier dispositif de désignation 41 pour pointer l'entité 310, par exemple une partie 310 de la machine 31 ou un objet, à l'aide d'un signal lumineux, avantageusement dans le spectre visible. Il indique alors au robot une action à effectuer sur cette cible via une interface homme machine, par exemple en lui parlant en langage naturel si le dispositif de désignation 41 ou le robot ou l'environnement est équipé d'un micro et d'un logiciel capable de comprendre des ordres donnés par oral, comme par exemple un logiciel de reconnaissance vocal et un chatbot utilisant un grand modèle de langage ou un modèle de fondation adapté aux interactions vocales, ou une interface homme machine comprenant un écran ou une interface homme machine tactile si l'usage de commandes vocales n'est pas possible.

Le dispositif de confirmation de visibilité 42 permet de confirmer à l'opérateur que le robot a bien vu la cible désignée par l'opérateur.

Le ou les dispositifs de confirmation d'atteignabilité (43, 44) sont utilisés pour indiquer à l'opérateur si la cible désignée peut être atteinte par le robot ou le ou les bras du robot, que cela nécessite ou non un déplacement de sa base mobile si le robot en est pourvu.

Le robot utilise un logiciel de planification d'action et de trajectoire, et / ou une base de données d'actions pré-apprises (par exemple à l'aide d'une approche à base d'intelligence artificielle par renforcement), connu(e)s de l'homme de l'art, pour générer un programme lui permettant de réaliser la tâche que l'opérateur programme et apprend au robot, en lien avec l'entité désignée.

L'opération est répétée autant de fois que le process le nécessite, le robot que l'opérateur programme étant lui-même adapté à la tâche à réaliser. A titre d'exemple, s'il s'agit de tourner une pièce à l'aide du tour numérique 31, on peut utiliser un robot équipé de deux bras robotiques équipés chacun d'un effecteur, et la séquence d'actions peut être composée des actions (tâches élémentaires) suivantes T1-T11, l'entité 310 désignée prenant une forme différente à chaque étape :
T1 : L'opérateur désigne (avec le premier dispositif de désignation 41) un bac dans lequel se trouvent des bruts à tourner, ou directement un brut se trouvant dans ce bac, et indique au robot (par exemple à l'aide d'une IHM à commande vocale ou d'une IHM basée sur l'usage d'un écran tactile) de saisir un ou ce brut avec un de ses bras.
T2 : Il désigne les mors du tour et indique au robot d'insérer le brut entre les mors, dans l'axe des mors.
T3 : Il désigne un bouton destiné à fermer les mors et indique au robot d'appuyer dessus avec son deuxième bras.
T4 : Il désigne un autre bouton destiné à fermer le capot de protection et indique au robot d'appuyer dessus avec son premier bras, qui n'a plus besoin de tenir le brut dès lors que celui-ci a été saisi entre les mors du tour, ce qui évite que ce bras reste « dans la machine » lors de la fermeture du capot.
T5 : Il désigne le bouton de mise en marche du tour et indique au robot d'appuyer dessus avec un de ses bras.
T6 : Il désigne le système de visualisation de la marche du tour (par exemple un écran de contrôle ou la colonne lumineuse au-dessus de la machine) et indique au robot la procédure à suivre pour attendre la fin du fraisage (par exemple un voyant qui s'allume au début du fraisage et s'éteint à la fin).
T7 : Il désigne le bouton d'ouverture du capot et indique au robot d'appuyer dessus quand le fraisage est terminé.
T8 : Il désigne les mors et indique au robot de venir saisir la pièce qui se trouvera dans les mors avec un de ses bras.
T9 : Il désigne à nouveau le bouton d'ouverture des mors et indique au robot d'appuyer dessus avec son autre bras.
T10 : Il désigne le bac ou la table destiné(e) à recevoir les pièces usinées et indique au robot de déposer la pièce terminée dans ce bac ou sur cette table.
T11 : Il indique au robot de refaire ces tâches tant qu'il y a des bruts.

La planification des actions et la génération des trajectoires peut être faite en temps réel après chaque désignation, ou de façon groupée à la fin de la séquence, sans que cela sorte du cadre de l'invention.

Selon un mode de réalisation, le dispositif de confirmation de visibilité 42 comprend un système de vision et des moyens de projection d'un deuxième motif 426 (figure 3). Le système de vision comporte un capteur de vision ainsi que des moyens de traitement du signal permettant de déterminer si le premier motif est dans le champ de vision du capteur de vision permettant au robot de percevoir son environnement, et notamment les entités désignées par l'opérateur. Ce capteur de vision peut par exemple prendre la forme d'une caméra intégrée au robot ou rapportée sur lui ou sur un autre élément de l'environnement ou encore faire partie d'un ensemble de caméras toutes intégrées au robot ou toutes rapportées sur lui ou toutes disposées sur d'autres éléments de l'environnement ou toute combinaison de ces possibilités.

Ainsi, la visibilité peut s'entendre comme la capacité du système de vision (dispositif de vision et algorithmes associés) à reconnaitre dans la ou les images (s'il y a plusieurs caméras) le motif projeté (ce qui suppose implicitement que ce motif est dans le champ de vision de la ou des caméras (en ouverture et en profondeur) et qu'il ne se trouve pas dans une zone d'ombre).

Si le premier motif est dans le champ de vision du capteur de vision (c'est-à-dire que le premier motif est « visible »), les moyens de projection du deuxième motif 426 peuvent être utilisés pour projeter ce deuxième motif 426 à proximité du premier motif (projeté par le premier dispositif de désignation 41) ou superposé sur ce premier motif, de sorte que l'opérateur 1 qui regarde en direction du premier motif 416 utilisé pour désigner l'entité 310 puisse aisément le voir. Par projection « à proximité », on entend un recouvrement au moins partiel du premier motif et du deuxième motif, avec un taux de superposition des aires générées par les points les plus éloignés de ces motifs supérieur à un seuil typiquement égal à 50% (c'est-à-dire que le deuxième motif recouvre au moins la moitié de la surface du premier motif). Par motifs « superposés », on entend que les barycentres des deux motifs, ou un élément particulier de ces motifs, par exemple l'endroit où se croisent les segments qui les composent s'il s'agit de motifs en croix (figure 4), sont projetés au même endroit.

Selon un autre mode de réalisation, compatible avec le mode de réalisation précédemment décrit, le dispositif de confirmation d'atteignabilité comprend des moyens de projection d'au moins un troisième motif (436, 446). Les moyens de projection d'au moins un troisième motif (436, 446) peuvent être portés par les effecteurs du robot (un dispositif de désignation 43 sur un premier effecteur et un dispositif de désignation 44 sur un deuxième effecteur, si le robot comprend au moins deux bras), mais ils pourraient aussi être disposés ailleurs sur le robot ou dans l'environnement. Pour vérifier si l'entité est atteignable par le ou les effecteurs du robot, on peut par exemple utiliser le système de vision et les moyens de traitement du signal associés, en combinaison avec des connaissances sur le positionnement de la caméra et du robot, pour calculer les coordonnées de l'entité dans le référentiel du robot, et les modèles du robot et de son ou ses effecteurs pour calculer les mouvements nécessaires pour l'atteindre et vérifier s'ils sont réalisables. Le troisième et le quatrième dispositifs de désignation peuvent alors projeter un troisième et un quatrième motifs (436, 446, figure 3), à proximité du premier motif ou superposés sur ce premier motif, si l'entité est atteignable par le ou les effecteurs. Par projection « à proximité », on entend un recouvrement au moins partiel du premier motif et du troisième/quatrième motif, avec un taux de superposition des aires générées par les points les plus éloignés de ces motifs supérieur à un seuil typiquement égal à 50% (c'est-à-dire que le troisième/quatrième motif recouvre au moins la moitié de la surface du premier motif). Par motifs « superposés », on entend que les barycentres de ces motifs, ou un élément particulier de ces motifs, par exemple l'endroit où se croisent les segments qui les composent s'il s'agit de motifs en croix (figure 4), sont projetés au même endroit.

On entend par « zone atteignable » une zone pour laquelle le mouvement nécessaire pour que l'effecteur atteigne la zone est réalisable par le robot (la même définition pouvant être donnée pour une « entité atteignable »). La fin du mouvement correspond à une configuration parmi un ensemble de configurations de l'effecteur que le robot permet d'atteindre, en tenant compte des caractéristiques (e.g. dimensions) et capacités (e.g. débattements articulaires) du robot, des caractéristiques et capacités de l'effecteur, et des caractéristiques de l'environnement (position et orientation de la base (fixe ou mobile) du robot, de la configuration de l'entité, ou encore de l'absence de collisions avec l'environnement).

Le premier dispositif de désignation 41, le deuxième dispositif de désignation 42 et le troisième dispositif de désignation 43 (voir le quatrième dispositif de désignation 44, si le robot a un deuxième effecteur) peuvent être de tout type permettant à l'opérateur et au robot d'indiquer la cible désignée, par exemple et de manière non exhaustive un pointeur laser, ponctuel ou non, ou un projecteur miniature capable de projeter sur tout type de support une cible ponctuelle ou non. Un tel projecteur pourra avantageusement utiliser un signal visible, afin que l'opérateur le voie, mais il pourra aussi projeter un signal en dehors du spectre visible (i.e. projection multispectrale), par exemple dans l'infrarouge.

La ou les caméras peu(ven)t avantageusement être équipée(s) d'un filtre passe bande (à une ou plusieurs bandes) à spectre étroit adapté aux types de signaux projetés par les dispositifs de désignation (qui peuvent ou non être tous du même type, ou d'un type différent, par exemple des pointeurs lasers et des projecteurs miniatures, fonctionnant ou non dans des bandes de fréquences identiques, par exemple des lasers rouges, verts et bleus).

Le premier motif 416 projeté par le dispositif 41 tenu par l'opérateur peut être ponctuel comme sur un pointeur laser. Il s'agit de la solution la plus simple mais si l'opérateur n'est pas habitué, il peut avoir du mal à repérer ce motif, et s'il a du mal à repérer ce motif il aura aussi du mal à projeter ce motif à l'endroit qu'il souhaite désigner. Pour éviter ce problème, on pourra avantageusement utiliser une cible en croix, (à peu près) verticale ou inclinée, plus facile à voir. La figure 4 illustre différents exemples de cibles comprenant une croix.

On peut, par exemple, utiliser pour cela des dispositifs d'éclairage similaires à ceux qui sont intégrés sur les niveaux laser, sans système de stabilisation gravitaire comme sur ces derniers et donc utilisables sans délai de stabilisation pour pointer une cible. On pourra encore, pour que la cible soit encore plus explicite, utiliser des motifs prenant la forme d'une mire associant des lignes droites et des cercles, ou encore un profil comprenant des éléments, comme par exemple des flèches, destinés à guider l'opérateur et à faciliter la convergence vers la cible qu'il souhaite désigner.

La forme des motifs, leur taille, leur couleur et l'épaisseur des traits des motifs peuvent être ajustés en fonction du contexte.

Par ailleurs, l'interface homme-machine peut être configurée pour permettre de modifier à la volée la forme, la taille ou tout autre paramètre du premier motif, du deuxième motif, du troisième motif (ou du quatrième motif, ou des motifs suivants s'il y en avait plus de quatre), de façon à s'adapter à la situation courante. On pourra par exemple utiliser une flèche pour désigner sur le sol une zone cible pour la base du robot (i.e. une configuration de référence en position et en orientation), les confirmations de visibilité et d'atteignabilité de cette configuration pouvant alors prendre la forme de croix projetées avec des orientations différentes.

Le logiciel de traitement du signal du capteur de vision du robot (qui peut par exemple être une caméra) sera adapté en fonction du choix de la forme du premier motif, de sorte que le robot reconnaisse facilement la position désignée par l'utilisateur. Une solution simple pourrait consister à utiliser le barycentre des points détectés, mais cela peut ne pas fonctionner correctement si l'ensemble de la cible n'est pas visible ou si la cible est déformée car la surface sur laquelle il est projeté n'est pas plane et perpendiculaire au système de désignation 41. On préférera donc utiliser un système capable de détecter les intersections des lignes et / ou les centres des cercles, ou un système à base de traitement du signal avancé ou d'Intelligence Artificielle apte à reconnaitre la position du centre du motif, que le motif soit entièrement visible ou seulement partiellement visible, et que le motif ait la forme attendue ou une forme modifié par la surface sur laquelle il est projeté, notamment quand cette surface n'est pas plane et perpendiculaire au système de désignation 41.

Pour signifier qu'il veut désigner une entité, l'opérateur peut l'éclairer à un moment précis en actionnant le premier dispositif de désignation 41, ou alors il peut activer le premier dispositif de désignation 41 sur une durée plus longue, pour mieux voir où il pointe, et spécifier la position ciblée en appuyant sur un bouton à un moment précis, ce bouton pouvant être intégré au premier dispositif de désignation par simplicité ou à un dispositif tenu dans l'autre main pour que l'appui sur le bouton ne perturbe pas la visée. On peut bien sûr aussi utiliser tout autre moyen pour choisir le moment du ciblage, par exemple et de manière non exhaustive une commande vocale, ou un clignement des yeux, ou un mouvement d'un bras ou d'une jambe repéré par un système additionnel (caméra, inclinomètre, accéléromètre, ...).

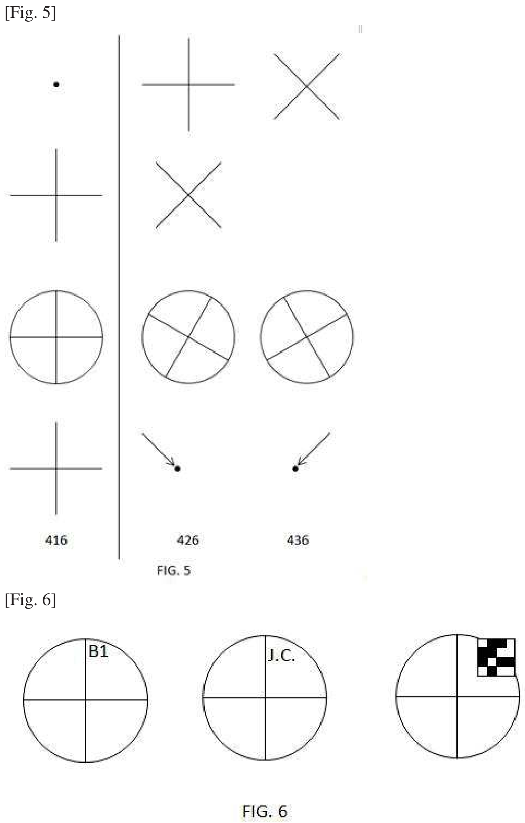

Comme cela est visible sur la figure 5, il est avantageux que le premier motif 416, le deuxième motif 426 et le troisième motif 436 (voire chacun des autres motifs si le robot comprend plusieurs effecteurs) soient différents les uns des autres, de sorte que l'opérateur puisse facilement les distinguer et savoir rapidement si l'entité est visible et atteignable par le bras qui doit effectuer la tâche.

Il est également possible d'utiliser des couleurs différentes afin de distinguer les différents motifs. On notera que pour permettre de distinguer les différents motifs les uns des autres, on peut aussi utiliser, comme le montre la figure 6, des profils intégrant un code associé à chaque dispositif de pointage (e.g. les initiales de l'opérateur pour le premier motif 416, les références B1 et B2 pour « bras 1 » et « bras 2 » pour les motifs 436 et 446, ou encore un QR code, un code barre, ou tout autre moyen approprié).

Ces quelques exemples ne sont pas limitatifs et ou pourrait utiliser n'importe quelle combinaison de type, couleur et code pour générer des motifs facilement distinguables les uns des autres, à la fois pour l'opérateur et pour le système de vision du robot.

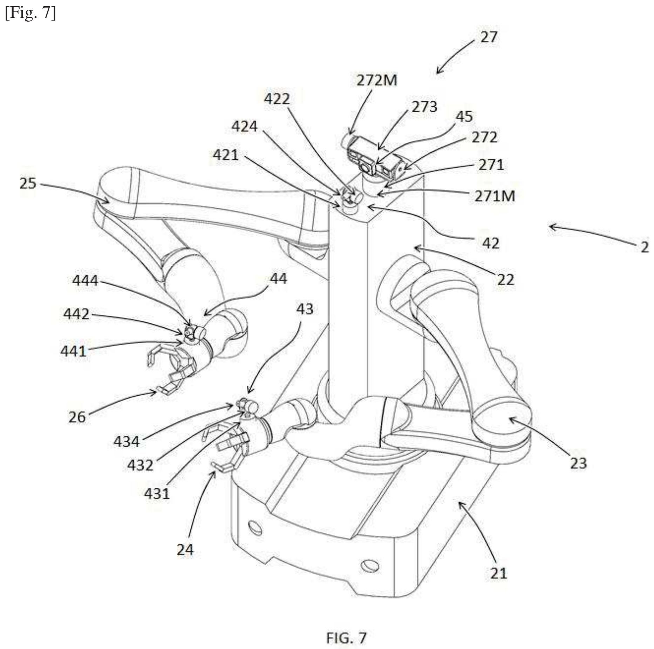

Une fois qu'une entité est désignée par l'opérateur, le dispositif de confirmation de visibilité 42 et le au moins un dispositif de confirmation d'atteignabilité (43, 44), permettent de confirmer la compréhension par le robot des ordres donnés par l'opérateur. Sur l'exemple de la figure 7, le robot 2 est constitué d'une base mobile 21 apte à se déplacer dans un atelier (par exemple à l'aide de roues, de chenilles ou de pattes) d'un tronc 22 (dont la hauteur est ici fixe mais qui pourrait intégrer un ou des axes permettant de modifier la hauteur de la caméra ou plus généralement du système de vision et / ou des bras robotiques), de deux bras robotiques (23, 25) équipés d'effecteurs (24, 26), et d'un système de vision 27 comprenant notamment un capteur de vision 273 (par exemple une caméra, ou tout autre système de vision apte à acquérir une image des motifs).

Le capteur de vision 273 du système de vision 27 est avantageusement monté mobile sur une structure constituée du corps 271, fixé sur le tronc 22, et du corps mobile 272 qui permettent, grâce aux systèmes de motorisation 271M, intégré ici au corps 271, et 272M, placé ici sur le côté du corps 272, équipés de capteurs et de dispositifs d'asservissement, de l'orienter selon deux axes non concourants. Ce type de structure « pan-tilt » est fourni à titre d'exemple. On pourrait bien sûr utiliser, en lieu et place de ce mécanisme, toute autre solution permettant de modifier l'orientation du capteur de vision 273 du système de vision 27. Le capteur de vision 273 pourrait aussi être fixé directement sur le tronc 22 (ou tout autre partie du robot), en particulier s'il a un champ de vision suffisamment large (e.g. capteur ou caméra équipée d'un objectif « fisheye », capteur ou caméra avec miroir panoptique, etc.).

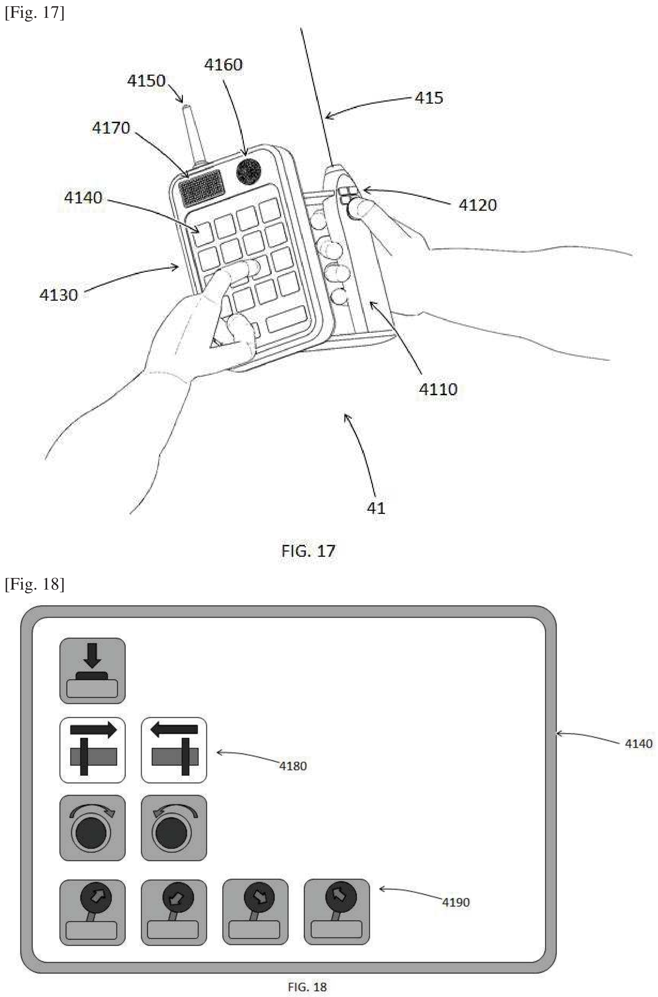

Le système de vision 27 peut avantageusement intégrer des fonctions d'intelligence artificielle. Cela permet de reconnaître l'entité désignée pour proposer des actions contextuelles comme il sera décrit ultérieurement au regard de la figure 18 et/ou d'utiliser l'entité désignée comme référence pour réaliser la même tâche sur tous les objets du même type. Par exemple, l'opérateur peut utiliser le premier dispositif de désignation 41 pour désigner un écrou à dévisser sur un moteur, et dire au robot 2 de reconnaître et dévisser tous les écrous du même type.

Sur l'exemple de la figure 7, les dispositifs de désignation (42, 43 et 44) sont tous les trois constitués d'un système d'illumination (une source lumineuse, par exemple à base de laser) (424, 434 et 444), montés sur une structure pan-tilt active (i.e. motorisée et asservie) constituée des corps mobiles (421-422, 431-432, et 441-442). Cette solution, qui pourrait être remplacée par toute alternative équivalente, permet de modifier de façon contrôlée l'orientation des faisceaux générés par les systèmes d'illumination (424, 434 et 444) et donc de modifier la position des motifs qu'ils génèrent. Si le système d'illumination (424, 434 et 444) a nativement la capacité de projeter une image complète dans un champ angulaire suffisamment large (s'il s'agit par exemple d'un micro-projecteur), la présence des systèmes pan-tilt (421-422, 431-432 et 441-442) n'est pas nécessaire.

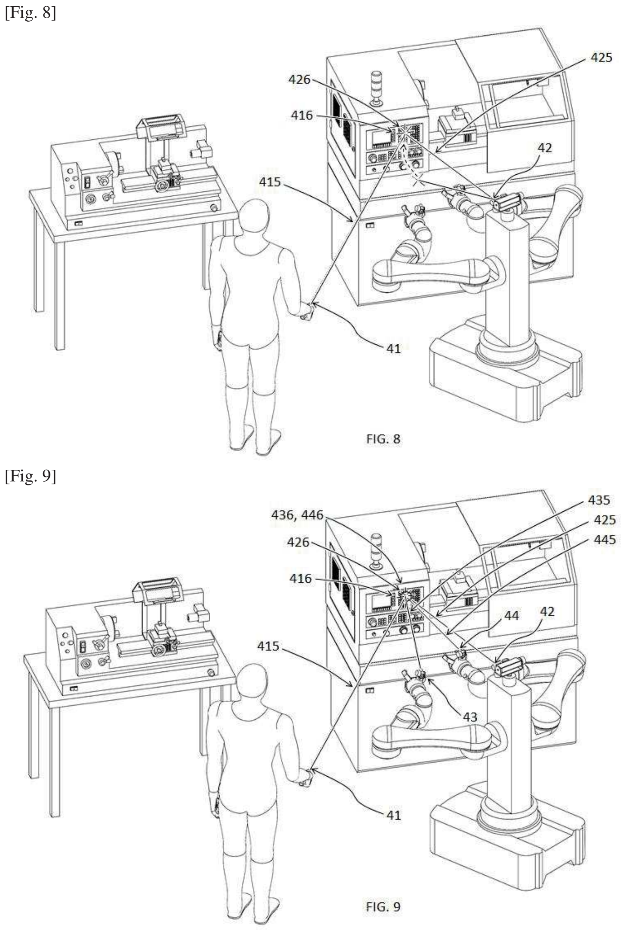

Le principe de fonctionnement de ces dispositifs sera mieux compris au regard de la figure 8 qui se focalise sur le dispositif de confirmation de visibilité 42, avantageusement positionné à proximité du système de vision 27 intégrant la caméra 273. Ce dispositif de confirmation de visibilité 42 permet d'indiquer à l'opérateur que le système de vision a bien vu le premier motif 416 généré par le premier dispositif de désignation 41. Lorsque l'opérateur désigne une position de référence avec le premier dispositif de désignation 41, le faisceau lumineux 415 de ce dispositif de désignation génère un premier motif (une cible) 416. Si ce premier motif est vu par la système de vision 27, le dispositif de confirmation de visibilité 42 sera asservi de sorte que le deuxième motif (cible) 426 généré par son faisceau lumineux 425 se positionne au même endroit que le premier motif 416. La couleur du deuxième motif 426 peut avantageusement être contrôlée en fonction de la situation, avec par exemple un deuxième motif 426 vert et au même endroit que le premier motif 416 si le premier motif 416 est visible et que le deuxième dispositif de désignation 42 arrive à caler ce second motif 426 sur le premier motif 416 et rouge et / ou à un endroit différent de celui où se trouve le premier motif 416 sinon (par exemple si la cible 416 est dans l'ombre d'un objet qui vient l'occulter pour le système de vision 27), moyennant l'usage de sources multicolores (e.g. plusieurs lasers ou un système de projection à plusieurs couleurs dans le domaine visible). L'asservissement du deuxième motif 426 sur le premier motif 416 pourra être basé :
- soit sur un asservissement absolu en position, moyennant l'usage du système de vision 27 pour estimer la position du premier motif 416 dans le repère caméra, et de modèles du robot et / ou des systèmes pan-tilt supportant la caméra et le deuxième dispositif de désignation 42 pour estimer cette position dans un repère commun à la caméra et au deuxième dispositif de désignation 42.
- soit sur un asservissement visuel relatif minimisant l'écart entre le premier motif et le deuxième motif.

L'asservissement peut avantageusement être effectué en temps réel tout au long des mouvements de l'opérateur, de sorte à capturer la position désignée à la volée, sans retard.

L'asservissement qui minimise l'écart entre le premier motif 416 et le rendu visuel 426 du caractère visible de l'entité désignée par l'opérateur peut être géré par une première unité de commande par asservissement.

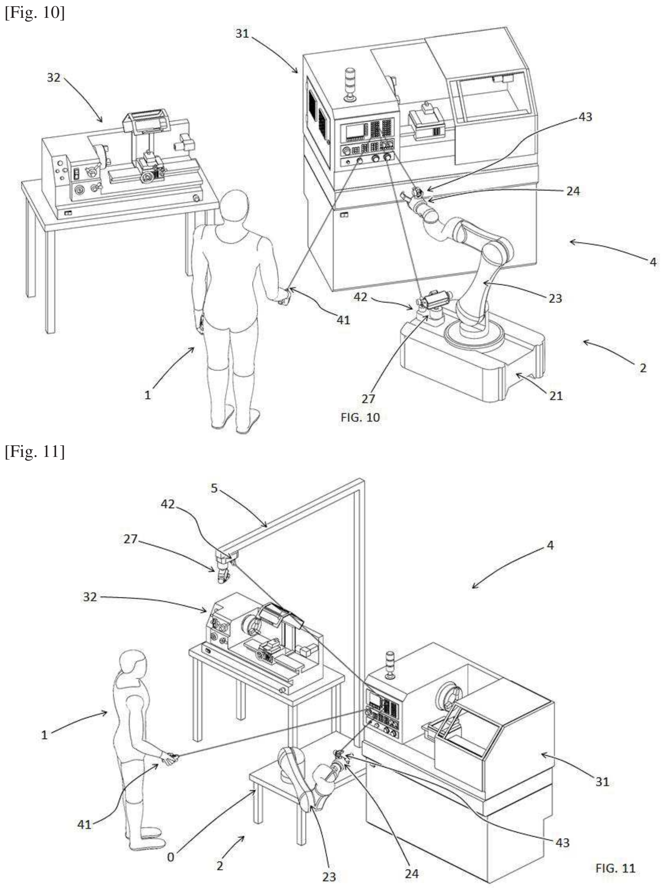

Le principe est le même pour le ou les dispositifs de confirmation d'atteignabilité (43, 44), si ce n'est que ce ou ces derniers sont destinés à afficher un ou des motifs (par exemple une ou des croix ou une ou des cibles) qui ne dépendent plus de la visibilité de la zone désignée par l'opérateur mais de son atteignabilité par le robot ou le ou les bras du robot, comme l'illustrent la figure 9 dans le cas où le robot comprend deux bras et deux effecteurs, et la figure 10 dans le cas où le robot ne comprend qu'un seul bras et un seul effecteur.

L'asservissement qui minimise l'écart entre le premier motif 416 et le rendu visuel (436, 446) du caractère atteignable de l'entité peut être géré par une deuxième et une troisième unités de commande par asservissement (si l'asservissement des motifs 436 et 446 est géré par deux unités de commande distinctes) ou par une seule deuxième unité de commande par asservissement (si l'asservissement des motifs 436 et 446 est géré par la même unité de commande) ou bien encore par la même unité de commande par asservissement que l'asservissement qui minimise l'écart entre le premier motif 416 et le rendu visuel 426 du caractère visible de l'entité désignée par l'opérateur.

Selon un premier mode de réalisation du dispositif de confirmation d'atteignabilité, le troisième ou le troisième et le quatrième dispositifs de désignation (43, 44), qui sont portés ici par les effecteurs 24 et 26 du robot 2 mais qui pourraient être disposés ailleurs sur le robot ou dans l'environnement, peuvent projeter un troisième et un quatrième motifs (436, 446) à proximité du premier motif 416 ou superposé sur le premier motif 416 si l'entité est atteignable par le ou les effecteurs. Un deuxième mode de réalisation du dispositif de confirmation d'atteignabilité sera décrit en lien avec la figure 18.

Ainsi, le troisième motif 436 produit par le faisceau lumineux 435 généré par le dispositif de confirmation d'atteignabilité 43, avantageusement disposé à proximité de l'effecteur 24 du bras 23 auquel le dispositif de confirmation d'atteignabilité 43 est associé, peut avantageusement être affiché en vert, après convergence des asservissements vers la position désignée par l'opérateur, si cette dernière peut être atteinte par l'effecteur 24, en rouge sinon. De même, le quatrième motif 446 produit par le faisceau lumineux 445 généré par le dispositif 44, avantageusement disposé à proximité de l'effecteur 26 du bras 25 auquel le dispositif 44 est associé, peut avantageusement être affiché en vert, après convergence des asservissements vers la position désignée par l'opérateur, si cette dernière peut être atteinte par l'effecteur 26, en rouge sinon. L'asservissement des troisième et quatrième motifs (436, 446) sur le premier motif 416 et sur le deuxième motif 426 peut utiliser les mêmes types d'approches et de modèles que l'asservissement du deuxième motif 426 sur le premier motif 416, tandis que la vérification de l'atteignabilité de ces motifs par le ou les bras du robot utilisera les modèles de ces bras, ou de leur espace de travail, ou un jumeau numérique. La vérification de l'atteignabilité de ces motifs pourra encore tenir compte des capacités et des modèles de déplacement de la base mobile si le robot 2 est mobile et que ce robot est autorisé à se déplacer pour réaliser les actions programmées par l'opérateur.

Pour éviter à l'opérateur d'avoir à maintenir longtemps son ciblage, on pourra avantageusement faire converger les motifs en deux temps, le deuxième motif 426 étant dans un premier temps asservi très rapidement (en temps réel) sur le premier motif 416 qui peut être sujet aux tremblements de l'utilisateur, et le deuxième motif 426 étant, dans un second temps, utilisé comme référence fixe pour l'asservissement, le plus rapide possible mais pas nécessairement en temps réel, des troisième et quatrième motifs (436, 446). Bien entendu il est aussi possible d'asservir en temps réel le deuxième motif 426 et les troisième et quatrième motifs (436, 446) sur le premier motif 416.

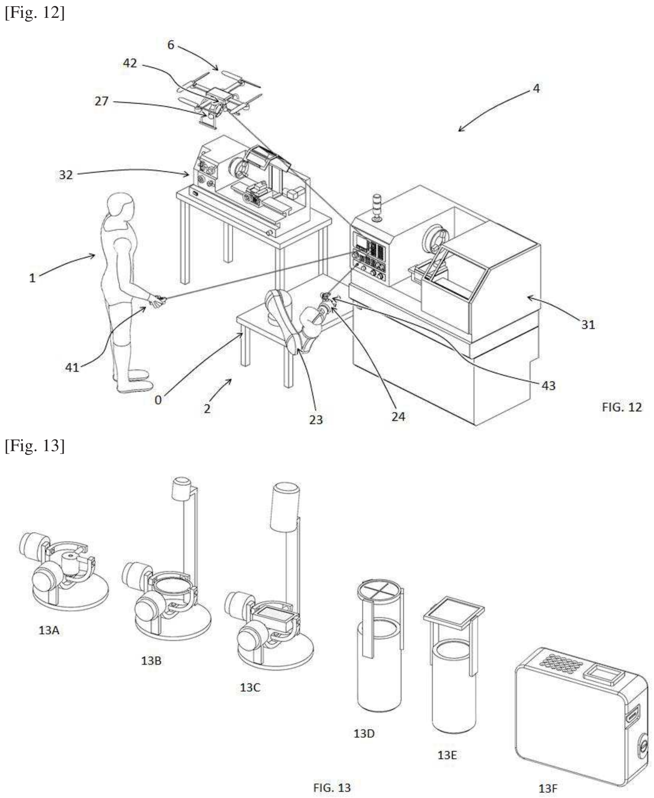

Les figures 11 et 12 illustrent un autre exemple où le robot 2 est fixe. Il est plus précisément fixé sur un support 0 judicieusement disposé pour donner le meilleur accès possible aux machines que le robot dessert dans l'atelier. Comme sur la figure 10, ce robot ne comporte qu'un seul bras 23 pourvu d'un seul préhenseur 24 (mais il pourrait aussi comporter plusieurs bras). Pour avoir la meilleure visibilité possible, le système de vision 27 peut être fixé sur un poteau 5 (ici intégré au support 0, mais ce poteau pourrait être indépendant du support du robot, et la caméra pourrait aussi être fixée ailleurs, par exemple au plafond de l'atelier, ou sur un pont roulant) ou porté par un drone 6, ce poteau ou ce drone intégrant aussi le deuxième dispositif de désignation 42. Comme sur la figure 10, le dispositif 4 ne comporte ici que trois dispositifs de projection de cibles : le premier dispositif de désignation 41 tenu par l'opérateur, le deuxième dispositif de désignation 42 et le troisième dispositif de désignation 43.

Comme indiqué précédemment, les motifs peuvent être générés, quand ils sont ponctuels, en croix, ou composés d'éléments géométriques simples, par des dispositifs tels que ceux qui sont intégrés dans des pointeurs ou des niveaux lasers. L'avantage des solutions à base de laser réside dans leur robustesse aux conditions d'éclairage.

Pour générer des profils plus complexes, on peut, comme le montre la figure 13, utiliser un spot laser asservi (pointeur laser monté à une plateforme parallèle orientable à deux axes motorisés et contrôlés, cf. 13A), ou un miroir asservi réfléchissant un spot laser (pointeur laser fixe et miroir monté sur une plateforme parallèle orientable à deux axes motorisés et contrôlés, cf. 13B), ou une matrice de micro-miroirs (par exemple du même type que celles utilisées dans les projecteurs DLP) réfléchissant un spot laser ou une image de forte intensité (cf. 13C), ou encore un masque ajouré (cf. 13D) ou un écran/panneau LCD (cf. 13E) situés en regard d'une source lumineuse non ponctuelle de forte intensité et pouvant être de couleur réglable et filtrant la lumière projetée par cette source lumineuse. L'avantage des solutions qui n'utilisent pas de laser réside dans leur moindre dangerosité.

Ces solutions à base de lasers ou de sources lumineuses de forte intensité sont peu onéreuses, mais il est également possible d'utiliser un projecteur vidéo miniature (13F), s'il y a moins de contraintes de coûts et d'encombrement à respecter.

Bien entendu ces exemples ne sont pas limitatifs et on pourra utiliser pour aboutir au même résultat toute solution ou combinaison de solutions :
- émissives (e.g. source laser, VECSEL, LEDs, ampoule, projecteur miniature, etc...) ponctuelles ou multiples ou matricielles, fixes ou mobiles ;
- transmissives (e.g. masque plus ou moins complexe, panneaux LCDs, etc...) ;
- réflexives (e.g. miroir monté sur cardan motorisé, panneau DLP, etc...).

Ces dispositifs peuvent mettre en œuvre si nécessaire des moyens optiques, connus de l'homme de l'art et sortant du strict cadre de l'invention, pour assurer la qualité optique du profil quelle que soit la distance de projection.

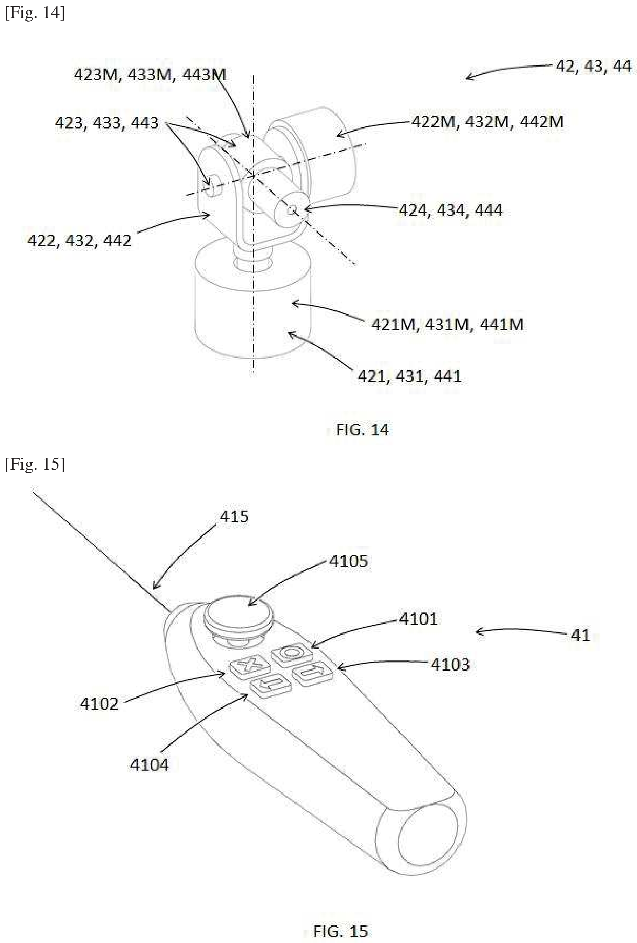

La figure 14 illustre un mode de réalisation dans lequel les dispositifs de désignation peuvent être équipés d'un degré de liberté supplémentaire pour modifier de façon contrôlée l'orientation du motif projeté en faisant tourner le dispositif d'éclairage autour de son axe. Chacun des dispositifs de désignation comprend ainsi le système pan-tilt (421-422, 431-432, 441-442), équipé des moyens de motorisation, de mesure et de contrôle (421M-422M, 431M-432M, 441M-442M), du corps (423, 433, 443) disposé en sortie de ce dispositif et du système d'éclairage (424, 434, 444), dont on peut modifier l'angle autour de son axe grâce aux moyens de motorisation, de mesure et de contrôle (423M, 433M, 443M).

Pour faciliter la désignation des entités de référence ou la position de ces entités et la programmation des actions associées à ces entités ou à ces positions, le système d'aide à la programmation d'un robot 4 comprend encore une IHM (pour « Interface Homme Machine »), qui peut être (mais de façon optionnelle) intégrée au premier dispositif de désignation 41. L'IHM peut comprendre, par exemple et dans une version très simple, un ensemble de boutons poussoirs, comme illustré par la figure 15. Sur cet exemple, le premier dispositif de désignation 41 est pourvu d'un bouton 4101 permettant de désigner une entité, i.e. un objet d'intérêt ou une partie de celui-ci ou une zone de l'environnement (le bouton 4101 permet d'indiquer quand la position de la cible générée par le faisceau lumineux 415 doit être prise comme référence par le robot), d'un bouton 4102 permettant d'annuler la désignation courante, d'un bouton 4103 permettant de passer à l'étape suivante, et d'un bouton 4104 permettant de revenir à l'étape précédente. Cette IHM peut encore être utilisée pour faciliter le rejeu des positions et des actions « apprises » (i.e. la répétition de ces actions). Le deuxième dispositif de désignation et les troisième et quatrième dispositifs de désignation peuvent alors être utilisés pour que le robot montre les positions successives qui ont été programmées et les actions associées (le deuxième dispositif pourra par exemple pointer sur la zone associée à une action donnée et les troisième et quatrième dispositifs pour signifier l'action associée, par exemple en déplaçant la cible dans la direction où le ou les bras du robot doivent bouger lors de cette étape). Ce rejeu des différentes étapes « apprises » pourra être lancé à la demande de l'opérateur, par exemple via le mini-joystick 4105. On pourra laisser le robot « rejouer » l'ensemble des étapes, ou naviguer parmi celles-ci, par exemple en appuyant sur le bouton 4103 pour passer à l'étape suivante ou sur le bouton 4104 pour revenir à l'étape précédente.

Ainsi, avec les dispositifs de pointage de la présente invention, l'opérateur peut aisément désigner des entités, et voir si elles sont visibles par le système de vision 27 permettant au robot 2 de percevoir son environnement, et atteignables par le robot 2. Pour vérifier qu'une entité est visible, on peut par exemple utiliser les moyens de traitement du signal associés au système de vision 27. Si ces moyens de traitement du signal détectent le premier motif 416 utilisé pour désigner cette entité et confirment ainsi que le premier motif 416 est dans le champ de vision du capteur de vision 273 du système de vision 27, l'entité sera qualifiée de « visible », et ce caractère visible sera signifié à l'opérateur par la projection du deuxième motif 426 à proximité du premier motif 416 ou superposé sur ce premier motif 416. Pour vérifier si l'entité est atteignable par le ou les effecteurs du robot, on peut par exemple utiliser le dispositif de vision 27 et les moyens de traitement du signal associés, en combinaison avec des connaissances sur le positionnement de la caméra et du robot, pour calculer les coordonnées de l'entité dans le référentiel du robot, et les modèles du robot et de son ou ses effecteurs pour calculer les mouvements nécessaires pour l'atteindre et vérifier s'ils sont réalisables, auquel cas l'entité sera qualifiée d' « atteignable ». Ce caractère atteignable sera alors signifié à l'opérateur par la projection du au moins troisième motif (436, 446) à proximité du premier motif 416 ou superposé sur ce premier motif 416, de sorte que ce caractère atteignable soit facilement compréhensible par l'opérateur, par exemple en projetant ces au moins troisième motif (436, 446) en vert.

Si les entités désignées par l'opérateur ne sont pas visibles et/ou atteignables, il peut déplacer le robot, par exemple en le déplaçant « à la main » s'il s'agit d'un robot collaboratif, ou lui demander de se déplacer, par exemple à l'aide d'une commande vocale (e.g. « avance de 50 centimètres »), ou à l'aide d'une télécommande, ou encore en désignant à l'aide du dispositif 41 une position différente au sol et en demandant au robot, par exemple à l'aide d'une commande vocale, de l'atteindre avec sa base mobile. Le motif projeté peut alors avantageusement être une flèche. Utilisée pour désigner une position sur le sol, et non pour confirmer son acquisition comme cela avait été illustré sur la figure 5, un tel motif permet avantageusement d'indiquer au robot à la fois la position à atteindre et l'orientation que doit avoir la base mobile dans cette position.

Si l'objectif est de commander les mouvements de la base du robot, l'usage d'une IHM très simple intégrée au dispositif de pointage, telle que celle illustrée par la figure 15, peut suffire. Le bouton 4101 peut par exemple être utilisé pour faire avancer le robot, le bouton 4102 pour le faire reculer, le bouton 4103 pour le faire tourner ou se déplacer vers la droite, et le bouton 4104 pour le faire tourner ou se déplacer vers la gauche. En alternative, on peut utiliser pour commander les mouvements de la base du robot le mini-joystick 4105, ce qui permet de libérer les boutons 4101 à 4104 pour d'autres fonctions (bien entendu l'iconographie des différents boutons sera adaptée aux fonctions qu'ils remplissent, à titre d'exemple les flèches des touches 4103 et 4104 pourront prendre des formes différentes de celles illustrées sur la figure 15), ou une commande vocale.

Si les entités sont visibles et atteignables, l'opérateur peut utiliser tout moyen adapté pour indiquer au robot l'action à effectuer à la position désignée. Comme pour la commande de la base mobile, l'opérateur peut utiliser une commande vocale (par exemple à l'aide d'un micro-cravate, ou d'un micro intégré au dispositif de désignation qu'il tient en main comme cela est illustré sur la figure 17) ou une IHM intégrée au dispositif de désignation d'objectif 41. Une IHM à base de boutons telle que celle illustrée par la figure 15 peut bien sûr être utilisée ici aussi, mais il peut être utile, si l'environnement comprend un grand nombre d'objets ou de commandes à actionner, de disposer d'un plus grand nombre de boutons, physiques et prédéfinis, physiques et reconfigurables, ou apparaissant sur un écran tactile entièrement reconfigurable et reprogrammable, pour s'adapter à l'environnement.

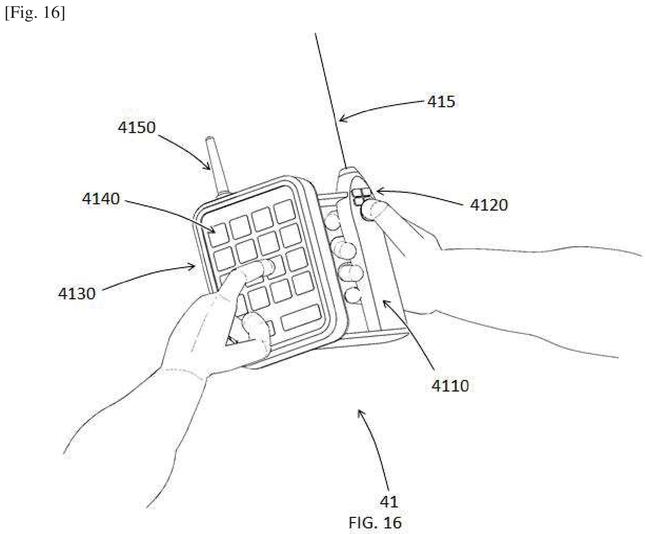

La variante du dispositif de désignation d'objectif illustrée par les figures 16 et 17 comporte par exemple, outre une zone de saisie 4110 et une première zone 4120 principalement destinée à gérer le faisceau lumineux 415, une seconde zone 4130 intégrant une IHM plus évoluée 4140 pouvant comprendre une boite à boutons plus complète ou un écran tactile (avantageusement reconfigurable et reprogrammable). Ce second type d'IHM 4140 peut avantageusement comprendre :
- des boutons physiques ou numériques permettant de contraindre davantage les mouvements du robot, par exemple pour s'assurer qu'il arrive perpendiculairement à la surface désignée par le motif généré par le faisceau 415 (cette surface et sa normale étant identifiées grâce à un logiciel de traitement des données fournies par le système de vision 27 ou connues grâce à un jumeau numérique du poste de travail, recalé ou non sur les données fournies par le système de vision 27), ou suivant un autre angle, par exemple à 45°, grâce à des icônes adaptées facilement compréhensibles par l'opérateur.
- et des boutons physiques ou numériques permettant d'indiquer au robot les actions à effectuer à l'endroit désigné par la cible, par exemple appuyer sur un bouton, déplacer un curseur, tourner une molette ou déplacer un levier, grâce là aussi à des icônes adaptées.

Il existe différentes solutions connues de l'homme de l'art pour identifier la géométrie locale des entités désignées par l'opérateur à partir des données ou des images fournies par le système de vision, pour recaler un jumeau numérique sur ces données, ou pour reconnaitre et identifier les objets situés aux endroits désignés par l'opérateur. On pourra choisir n'importe laquelle d'entre elles, qu'elle soit basée sur l'intelligence artificielle ou non, sans que cela sorte du cadre de l'invention.

La variante de l'interface homme machine illustrée par la figure 17 diffère de celle illustrée par la figure 16 en ce qu'elle comprend des interfaces audio, en entrée (i.e. un ou des micros 4160) et en sortie (i.e. un ou des hauts parleurs 4170). Le ou les micros permettent à l'opérateur de compléter ses instructions par des commandes vocales. Il peut par exemple dire au robot d'arriver perpendiculairement à la surface de l'entité désignée (plutôt que d'utiliser un bouton de l'IHM pour cela) tout en utilisant un bouton pour indiquer l'action à faire. Le ou les hauts parleurs permettent quant à eux au robot d'indiquer qu'il a bien pris en compte les instructions de l'opérateur, en complément de l'usage des second, troisième et quatrième dispositifs de désignation. Bien entendu, et comme il a déjà été décrit précédemment, on peut aussi utiliser une autre interface audio pour cela, par exemple et de façon non limitative un micro cravate et un casque audio, et on peut utiliser pour programmer le robot toute combinaison de commandes vocales et de commandes utilisant des boutons physiques ou un écran tactile.

En outre, les variantes de l'IHM illustrées par la figure 16 et la figure 17 comportent une antenne 4150 qui fait partie des moyens de communication entre les différents composants du dispositif 4 de la présente invention.

Un deuxième mode de réalisation du dispositif de confirmation d'atteignabilité est décrit en lien avec la figure 18. Selon ce deuxième mode de réalisation, le rendu visuel du caractère atteignable de la zone désignée n'est pas matérialisé par la projection d'un troisième (voire d'un quatrième) motif, mais par un affichage d'icônes contextuelles 4180 par l'interface homme-machine 4140, les icônes étant affichées en fonction d'un contexte d'atteignabilité du ou des effecteurs (24, 26) sur l'entité 310 (s'il y a plusieurs effecteurs, les icônes contextuelles seront affichées successivement pour chacun des effecteurs, ou simultanément dans deux zones différentes de l'IHM 4140, avec des moyens de distinguer celles qui sont relatives à l'un des effecteurs et celles qui sont relatives à l'autre effecteur, par exemple à l'aide de messages distinctifs, e.g. R1 et R2 pour robot 1 et robot 2, ou d'icônes de couleurs différentes).

Ainsi, selon le deuxième mode de réalisation, pour programmer une tâche du robot, l'opérateur 1 utilise le premier dispositif de désignation 41 pour pointer un faisceau lumineux sur l'entité 310. Le dispositif de confirmation de visibilité 42 permet de confirmer à l'opérateur que le robot a bien vu la cible désignée par l'opérateur. Il indique alors au robot une action à effectuer sur cette cible via l'interface homme machine 4140 qui affiche, si l'entité 310 est également atteignable, des icônes représentant les actions qui peuvent être effectuées par le ou les effecteurs du robot au niveau de cette entité (et uniquement ces icônes). Sur la figure 18, la sélection d'icônes affichées correspond, par exemple, à des actions d'appui sur un bouton, de déplacement d'un curseur vers la gauche ou vers la droite, de déplacement d'un bouton rotatif vers la gauche ou vers la droite ou de déplacement d'un pommeau de commande dans différentes directions.

Selon un mode de réalisation, les icônes qui ne sont pas concernés par l'action de l'effecteur peuvent être grisés, ou affichés avec un niveau de luminosité plus faible, ou ne pas être affichés du tout. Sur la figure 18 par exemple, les icônes 4190 qui ne sont pas concernées par l'action de l'effecteur ont un fond grisé, et les icônes 4180 qui sont concernées par l'action de l'effecteur ont un fond blanc.

Ainsi, l'affichage contextuel d'icônes permet à l'opérateur de programmer uniquement des tâches relatives à des entités atteignables par le ou les effecteur(s) du robot.

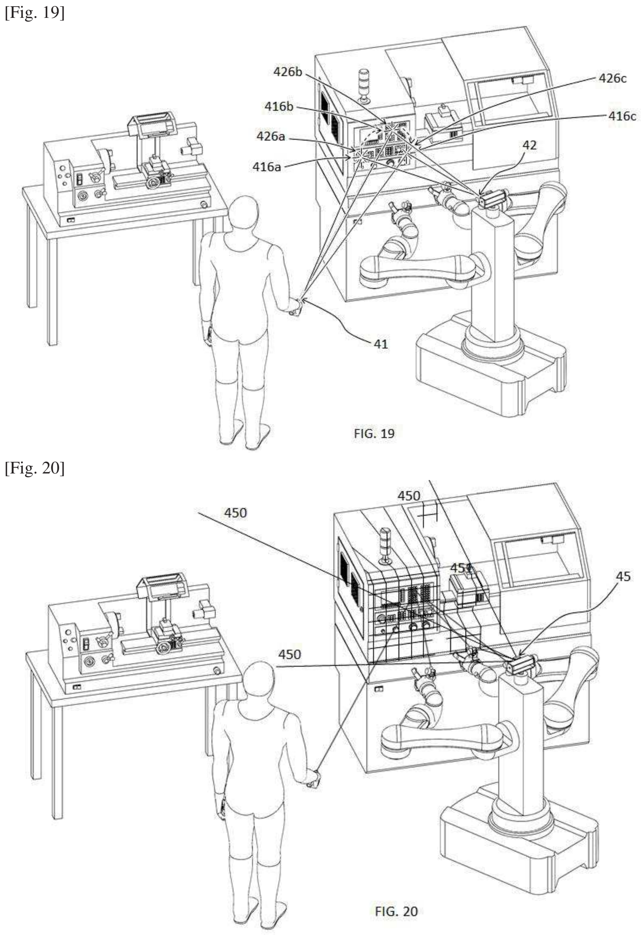

Selon un mode de réalisation illustré par la figure 19, les positions successives des entités désignées par l'opérateur à l'aide du premier dispositif de désignation 41 (notées 416a, 416b et 416c sur la figure 19) sont avantageusement enregistrées par le robot, de façon à pouvoir les faire « rejouer » par le dispositif de confirmation de visibilité 42 (points 426a, 426b et 426c) pour vérifier, adapter ou changer le scénario (le dispositif de confirmation de visibilité 42 peut aussi être utilisé pour visualiser la projection, sur l'environnement immédiat des positions désignées, de la trajectoire du robot, générée par son logiciel de commande à partir des positions apprises).

Comme cela a été indiqué précédemment, pour que le système d'aide à la programmation fonctionne, il faut que le robot puisse voir le premier motif projeté par l'opérateur, quitte à devoir déplacer le robot si le premier motif ne se trouve pas dans le champ de vision du robot. Ainsi, la confirmation de visibilité est généralement effectuée a posteriori.

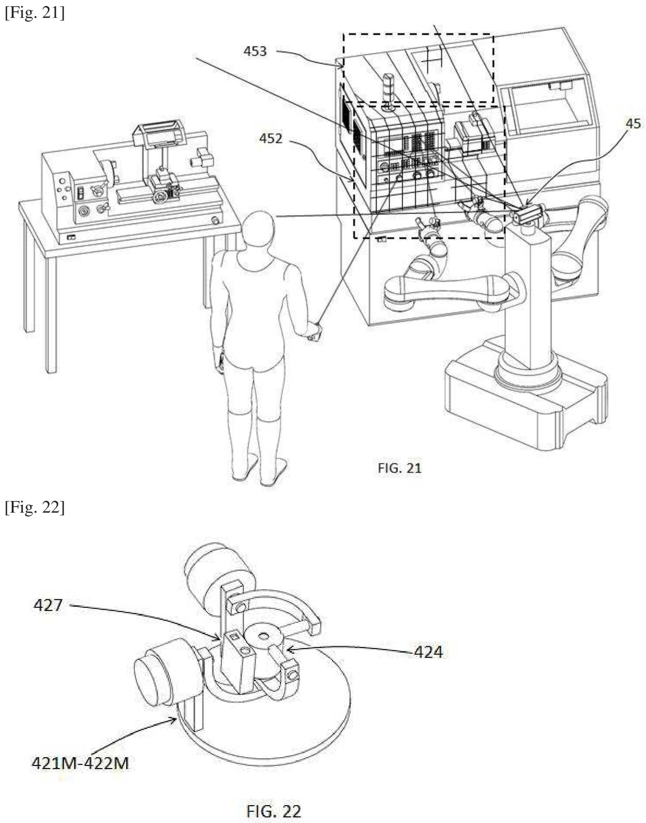

Pour faciliter la vérification par l'opérateur que le premier motif sera a priori visible, il est envisageable, selon un mode de réalisation illustré par les figures 20 et 21, d'utiliser un dispositif additionnel de projection 45. Comme le montre la figure 20, ce dispositif peut être utilisé pour projeter un quadrillage, ou tout autre profil permettant d'aider l'opérateur à visualiser le champ de vision du système de vision 27, c'est à dire ce que le robot peut voir.

Sur la figure 7, un dispositif additionnel de projection 45 est fixé sur le capteur de vision 273 du système de vision 27, ici une caméra 3D. Le dispositif additionnel de projection 45 est avantageusement fixé entre les deux optiques de la caméra 3D afin que la projection soit faite depuis une configuration la plus proche possible de l'axe de la caméra 273. Bien entendu le dispositif additionnel de projection 45 pourrait prendre une forme différente pour un autre type de capteur. Il pourrait par exemple s'agir d'un dispositif annulaire venant se positionner autour de l'objectif sur une caméra 2D.

Les « limites » du champ de vision du robot, illustrées par les références 450 (figure 20), ne sont pas réellement visibles (sauf à les projeter dans un casque de réalité augmentée porté par l'opérateur). Seul le profil projeté, qui s'en approche avantageusement le plus possible, l'est. Ce processus peut générer des « zones d'ombres » produites par l'environnement (par exemple le rail et la tête d'usinage 451 sur la figure 20) ou par le ou les bras du robot. Pour éviter celles que produit ce dernier, les bras du robot peuvent être déplacés. En alternative, le capteur de vision pourrait faire partie d'un ensemble de caméras toutes intégrées au robot ou toutes rapportées sur lui ou toutes disposées sur d'autres éléments de l'environnement ou réparties sur le robot et dans l'environnement, comme il a été expliqué précédemment. Dans ce cas, on pourrait utiliser, sans sortir du cadre de l'invention, plusieurs dispositifs additionnels de projection 45, chacun d'eux étant associé à une des caméras de tout ou partie de l'ensemble de caméras.

Il est possible d'utiliser deux couleurs (générées par exemple par deux sources laser) pour distinguer les zones 452 qui sont dans le champ de vision du robot et dans la zone de vision optimale du capteur et les zones 453 qui sont dans le champ de vision mais à une trop grande (ou une trop faible) profondeur pour que la camera puisse les voir correctement.

Sur les figures 20 et 21, la visualisation du champ de vision de la caméra du robot est obtenue à l'aide de lignes laser, dont l'écartement peut avantageusement être réglé en fonction de la précision que l'on veut obtenir. Il serait également possible de projeter des « tâches de couleur » décrites dans les articles [Wilkinson1] et [Wilkinson2], mais de telles tâches ne sont pas forcément adaptées dans un environnement industriel qui peut comporter d'autres sources de lumière colorée.

De manière générale, en désignant des entités qui se trouvent dans la zone balayée par le dispositif de projection 45, et en particulier celles qui sont dans le champ de vision du robot et dans la zone de vision optimale du capteur, l'opérateur peut être sûr que ces entités seront visibles par le robot.

Selon un mode de réalisation illustré par la figure 22, le dispositif de confirmation de visibilité 42 et/ou le ou les dispositifs de confirmation d'atteignabilité (43, 44) peuvent avantageusement intégrer un capteur de distance 427 (e.g. à ultrasons, capacitif, à base de laser à temps de vols, de laser à déphasage, ou autre) permettant d'estimer la distance entre la source lumineuse (424, 434, 444) du dispositif de désignation et le motif projeté (que ce soit le deuxième et/ou le troisième et/ou le quatrième motif).

Cela permet, en association avec les informations sur la configuration du robot 2 et / ou du poteau 5 ou du drone 6, du système de vision et des dispositifs de désignation, de calculer la position absolue de l'entité désignée dans le repère du robot ou dans le repère de l'atelier, ce qui peut être utile pour générer les trajectoires du robot. Un tel capteur de distance peut également être intégré au premier dispositif de désignation 41, qui disposera alors de moyens permettant d'estimer la position du premier motif 416 dans un repère lié au dispositif de désignation 41. Ce dispositif pourra aussi être équipé de moyens de mesure (accéléromètres et gyromètres et / ou dispositif de capture de mouvement par exemple) permettant de mesurer sa configuration dans l'espace, afin de pouvoir là aussi estimer la position absolue du premier motif 416.

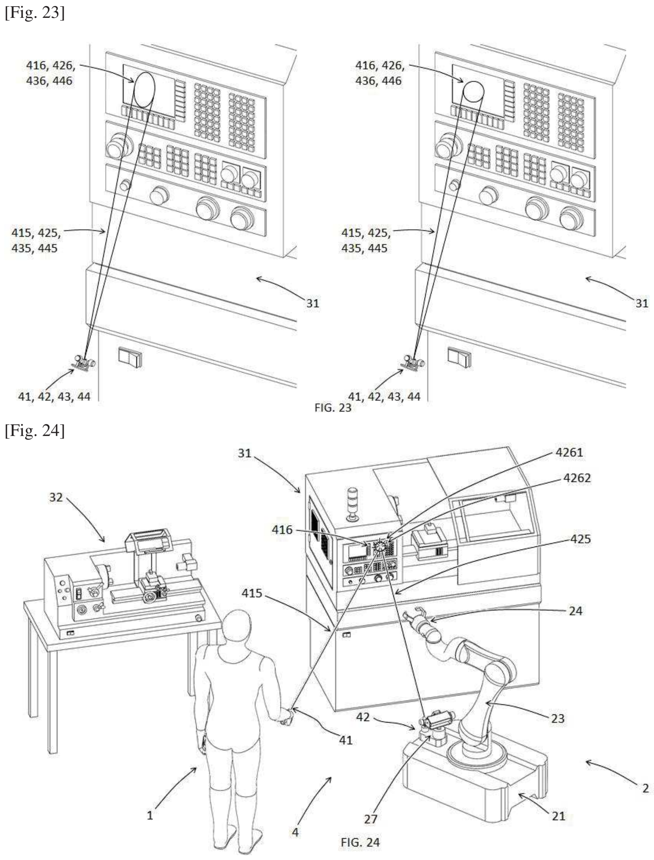

Comme illustré sur la figure 23, le capteur de distance peut être intégré au plus proche du faisceau des dispositifs de désignation (41, 42, 43, 44), afin de mesurer sa longueur en tous points du profil généré. Le premier dispositif de désignation 41, le dispositif de confirmation de visibilité 42 et/ou le ou les dispositifs de confirmation d'atteignabilité (43, 44) peuvent comprendre, en outre, un moyen de correction de la forme du premier motif 416, respectivement du rendu visuel 426 du caractère visible de l'entité 310 et/ou du rendu visuel (436, 446) du caractère atteignable de l'entité 310. Cette correction pourra par exemple être obtenue par une modification du profil généré par la plateforme mobile des dispositifs 13A, 13B ou 13C illustrés sur la figure 13 fonction de l'écart entre la distance attendue et la distance mesurée en chaque point de ce profil, ou encore par une modification du pilotage des éléments réflexifs ou transmissifs des dispositifs 13C, 13D et 13E, ou de l'image générée par le projecteur 13F.

Cette solution a l'avantage de permettre, si nécessaire, de corriger en temps réel la forme du profil projeté afin qu'il reste toujours semblable et intelligible par l'opérateur.

Par exemple, sur la partie gauche de la figure 23, il apparaît que le premier motif 416 est fortement allongé, en raison de la position désaxée du faisceau 415 issu du premier dispositif de désignation 41, par rapport à la normale à la zone éclairée. Sur la partie droite de la figure 23, le moyen de correction applique une correction à la forme projetée, de façon à ce que l'opérateur puisse voir le motif habituellement attendu. Bien entendu ces corrections pourraient être déclenchées par tout autre moyen de détection de l'angle entre les faisceaux lumineux et la surface sur laquelle ils sont projetés. On pourra par exemple utiliser le jumeau numérique de la scène et / ou des algorithmes avancés de vision, à base d'intelligence artificielle ou non, pour reconstruire la surface locale sur laquelle sont projetés les motifs et les corriger en fonction des caractéristiques de cette surface. Le capteur de distance intégré au dispositif de désignation reste un moyen simple pour évaluer la position et l'environnement proche de l'entité désignée. Ce mode de réalisation permet également aux systèmes de vision de reconnaître plus facilement les motifs projetés.

Sur un autre mode de réalisation illustré par la figure 24, sur lequel le robot ne comporte qu'un seul bras 23 équipé d'un préhenseur 24 (mais il pourrait aussi être équipé de plusieurs bras et de plusieurs préhenseurs, et il pourrait être équipé d'un ou plusieurs effecteurs qui ne sont pas des préhenseurs, comme par exemple des outils, des capteurs ou des systèmes d'inspection, à base de vision ou de tout autre modalité de mesure), les motifs de confirmation de visibilité et d'atteignabilité de l'entité désignée par le motif 416 sont générés par le même dispositif de désignation, ici le dispositif 42 associé au système de vision 27 et dont le faisceau 425 génère les motifs 4261 (équivalent au motif 426) et 4262 (équivalent au motif 436).

Dans ce cas il n'est pas nécessaire d'intégrer un dispositif de désignation sur le bras 23 ou le préhenseur 24 et un tel dispositif n'apparait pas sur la figure 24, mais bien entendu on pourrait aussi ne conserver que le dispositif de désignation 43 associé au robot et pas celui associé à la caméra, le dispositif de désignation 43 étant utilisé pour générer un motif équivalent au motif 426 et un motif équivalent au motif 436.

On pourrait également conserver les dispositifs de désignation 42 et 43 et utiliser, suivant les conditions (et en particulier les ombres projetées par le robot ou d'autres éléments de l'environnement), soit le dispositif de désignation 42 associé au système de vision, soit le dispositif de désignation 43 associé au robot, pour projeter à la fois les motifs de confirmation de visibilité et d'atteignabilité. On pourrait encore utiliser le dispositif de projection 45 pour générer tout ou partie des motifs (426, 436, 446), ou toute combinaison des dispositifs (42, 43, 44, 45).

Ce mode de réalisation offre un gain de volume, car un seul dispositif est nécessaire pour projeter à la fois le motif de confirmation de visibilité et le ou les motif(s) de confirmation d'atteignabilité. Pour cela, il faut que le dispositif utilisé permette de projeter deux profils différents ou plus.

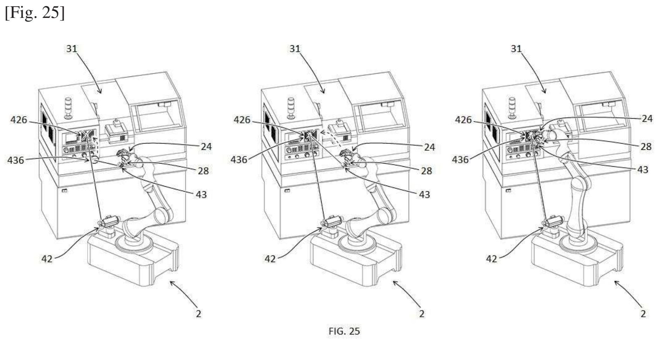

Selon un mode de réalisation de l'invention, le dispositif de confirmation de visibilité 42 et/ou le dispositif de confirmation d'atteignabilité (43, 44) peuvent aussi être utilisés pendant l'exécution des tâches par le robot, afin de faire de l'asservissement visuel sur le deuxième ou le troisième motif. Comme l'illustrent les trois planches de la figure 25, le robot 2 est avantageusement équipé d'une caméra supplémentaire 28 disposée à proximité de l'extrémité du bras 23 ou sur l'effecteur 24, et les deuxième et troisième dispositifs de désignation utilisent avantageusement des faisceaux laser pour que les profils générés soit aisément visibles par la caméra supplémentaire 28 (y compris pour des tâches comme la taille d'arbres, qui sont effectuées en extérieur où la luminosité peut varier fortement).

Le principe de fonctionnement est alors le suivant : si le deuxième et le troisième dispositifs de désignation sont distincts, le troisième dispositif de désignation est dans un premier temps, et uniquement si cela est nécessaire, commandé pour faire converger le troisième motif 436 et le deuxième motif 426, la convergence étant surveillée en temps réel par le système de vision 27 et/ou par caméra supplémentaire 28. Dans un second temps, le robot est commandé pour que l'effecteur rejoigne la zone désignée par le deuxième motif 426 et le troisième motif 436, en utilisant un asservissement visuel sur un de ces motifs. Il n'est toutefois pas nécessaire d'utiliser les deux motifs pour commander le robot. Il est possible de n'en utiliser qu'un seul, par exemple celui généré par le dispositif de confirmation de visibilité 42.

L'asservissement visuel sur des motifs générés par le robot lui-même pourrait aussi être utilisé si les positions de référence de ces motifs n'étaient pas désignées par l'opérateur mais par un système automatique, par exemple à base d'intelligence artificielle, utilisé par exemple, dans le domaine agricole, pour localiser de façon autonome des fruits à cueillir ou des branches à tailler.

L'invention telle que décrite facilite la programmation de tout type de robot pour tout type d'applications. Les applications industrielles sont particulièrement (mais non exclusivement) visées. Il est également envisageable de l'utiliser dans le domaine de la robotique agricole, en désignant un type de fruit ou de légume spécifique et/ou avec un murissement spécifique et en indiquant au robot de cueillir tous les fruits ou légumes du même type et/ou aussi mûrs, ou en désignant un type de plantes à arracher et en lui disant d'arracher toutes les plantes du même type. On peut aussi l'utiliser dans le domaine de l'inspection et de la maintenance, en demandant au robot d'inspecter plus précisément la zone désignée, ou de repérer tous les défauts semblables à celui que l'opérateur désigne, et de manière générale dans toutes les situations où la désignation d'un objet ou d'une zone spécifique permet d'indiquer facilement un endroit d'intérêt à un robot.

### Documents cités

[Wilkinson1] A. Wilkinson, A. Sinclaire, H.A. Yanco, 'Spatial Augmented Reality User Interface for Assistive Robot Manipulation', Proc. ACM/IEEE Workshop on Virtual, Augmented, and Mixed Reality for Human-Robot Interactions, Stockholm, Sweden, 13 March 2023, pp. 1-5
[Wilkinson2] A. Wilkinson, M. Gonzales, P. Hoey, D. Kontak, D. Wang, N. Torname, A. Sinclaire, Z. Han, J. Allspaw, R. Platt, H. Yanco, 'Design guidelines for human-robot interaction with assistive robot manipulation systems', Paladyn, Journal of Behavioral Robotics 2021, Vol. 12, No. 1, Jan. 2021, pp. 392-401,

## Revendications

1. Système d'aide à la programmation d'un robot (2) apte à effectuer au moins une action sur une entité (310), comprenant :
- un premier dispositif de désignation (41), configuré pour permettre à un opérateur (1) de désigner une entité (310) en projetant un premier motif (416) sur l'entité (310) ;
- un dispositif de confirmation de visibilité (42, 45), configuré pour fournir à l'opérateur un rendu visuel (426, 4261) du caractère visible, par le robot (2), du premier motif (416) ;
- au moins un dispositif de confirmation d'atteignabilité (43, 44, 45, 4140), configuré pour fournir à l'opérateur (1) un rendu visuel (436, 446, 4262, 4180) du caractère atteignable, par un effecteur (24, 26) du robot (2), de l'entité (310) ;
- une interface homme-machine (4101-4105, 4140, 4160-4170), configurée pour recevoir au moins une commande, fournie par l'opérateur (1), d'interaction du robot (2) avec l'entité (310).

2. Système selon la revendication 1, dans lequel la commande n'est validée que si le caractère visible du premier motif (416) et le caractère atteignable de l'entité (310) sont confirmés.

3. Système selon l'une des revendications précédentes, dans lequel le dispositif de confirmation de visibilité (42) comprend un système de vision (27) et des moyens de projection d'un deuxième motif (426) sur le premier motif (416) si le premier motif (416) est dans le champ de vision du système de vision (27).

4. Système selon l'une des revendications précédentes, dans lequel le dispositif de confirmation d'atteignabilité (43, 44) comprend des moyens de projection d'au moins un troisième motif (436, 446) sur le premier motif (416) si l'entité est atteignable par l'effecteur (24, 26).

5. Système selon les revendications 3 et 4, dans lequel le premier motif (416), le deuxième motif (426) et le troisième motif (436) sont différents les uns des autres.

6. Système selon l'une des revendications 3 ou 5, dans lequel le dispositif de confirmation de visibilité (42) est configuré pour modifier la couleur du deuxième motif (426) en fonction du caractère visible ou non du premier motif (416) par le système de vision (27).

7. Système selon l'une des revendications 4 à 6, dans lequel le dispositif de confirmation d'atteignabilité (43, 44) est configuré pour modifier la couleur du troisième motif (436, 446) en fonction du caractère atteignable ou non de l'entité (310) par le robot (23, 25) ou l'effecteur (24, 26).

8. Système selon la revendication 1, dans lequel le rendu visuel du caractère atteignable de la zone désignée comprend un affichage d'icônes contextuelles (4180) par l'interface homme-machine (4140), les icônes étant affichées en fonction d'un contexte d'atteignabilité de l'effecteur (24, 26) sur l'entité (310).

9. Système selon l'une des revendications précédentes, comprenant un dispositif de projection (45), configuré pour éclairer tout le champ de vision du robot.

10. Système selon la revendication 9, dans lequel le dispositif de projection (45) est configuré pour projeter un quadrillage de lignes dont l'écartement est ajustable en fonction de la précision souhaitée.

11. Système selon l'une des revendications précédentes, dans lequel le premier dispositif de désignation (41), le dispositif de confirmation de visibilité (42) et/ou le dispositif de confirmation d'atteignabilité (43, 44) comprennent un moyen de correction de la forme respectivement du premier motif (416), du rendu visuel (426) du caractère visible du premier motif (416) et/ou du rendu visuel (436, 446) du caractère atteignable de l'entité (310).

12. Système selon la revendication 11, comprenant une unité logicielle de traitement d'images configurée pour déterminer la distance entre l'effecteur (24, 26) et l'entité (310), ou un capteur de distance configuré pour déterminer la distance jusqu'à l'entité, le moyen de correction appliquant une correction en fonction de la distance déterminée.

13. Système selon l'une des revendications précédentes, dans lequel le dispositif de confirmation de visibilité (42) et le dispositif de confirmation d'atteignabilité (43, 44) sont intégrés dans une même structure qui est configurée pour projeter à la fois le motif de rendu visuel (426) du caractère visible du premier motif (416) et le motif du rendu visuel (436, 446) du caractère atteignable de l'entité (310).

14. Procédé d'aide à la programmation d'un robot (2) apte à effectuer au moins une action sur une entité (310), comprenant :
- une première étape de désignation d'une entité (310) en projetant un premier motif (416) sur l'entité (310) ;
- une deuxième étape de fourniture d'un rendu visuel (426) du caractère visible, par le robot (2), du premier motif (416) ;
- une troisième étape de fourniture d'un rendu visuel (436, 446) du caractère atteignable, par un effecteur (24, 26) du robot (2), de l'entité (310) ;
- une quatrième étape de réception d'au moins une commande, fournie par l'opérateur (1), d'interaction du robot (2) avec l'entité (310).

15. Procédé selon la revendication 14, dans lequel la commande n'est validée que si le caractère visible du premier motif (416) et le caractère atteignable de l'entité (310) sont confirmés.

16. Produit programme d'ordinateur comportant des instructions pour l'exécution d'un procédé selon la revendication 15, lorsque le programme est exécuté par un processeur.
